(19) Europäisches Patentamt
European Patent Office
Office européen des brevets

(11) **EP 1 239 665 B1**

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(51) Int Cl.:
*G02B 5/00* (2006.01)  *H04N 3/15* (2006.01)

(21) Anmeldenummer: **02004857.5**

(22) Anmeldetag: **04.03.2002**

(54) **Blendenanordnung für ein mikrooptisches System**

Shutter assembly for a micro-optic system

Arrangement de diaphragmes pour un système micro-optique

(84) Benannte Vertragsstaaten:
**DE FR GB**

(30) Priorität: **09.03.2001 DE 10111465**

(43) Veröffentlichungstag der Anmeldung:
**11.09.2002 Patentblatt 2002/37**

(73) Patentinhaber: **Diehl BGT Defence GmbH & Co.KG**
**88662 Überlingen (DE)**

(72) Erfinder: **Krogmann, Dirk**
**88696 Owingen (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
EP-A- 0 273 671    DE-A- 4 327 944
DE-A- 19 904 914    US-A- 2 186 203
US-A- 3 447 438    US-A- 3 511 560
US-A- 4 419 585

EP 1 239 665 B1

**Beschreibung**

**Technisches Gebiet**

Die Erfindung betrifft eine Blendenanordnung für ein mikrooptisches System, das aus einem zweidimensionalen Raster von Mikrooptiken mit einem Rastermaß besteht.

**Stand der Technik**

Ein solches zweidimensionales Raster von Mikrooptiken wird beispielsweise benutzt in einer bildauflösenden Detektoranordung, die in der DE 199 04 914 A1 beschrieben ist.

Aus der US 3,447,438 ist eine aus drei Blendenplatten bestehende Blendenanordnung bekannt. Die Blendenplatten weisen dabei Öffnungen mit einem Rastermaß auf, wobei eine Stegbreite des Rasters mit einer Öffnungsbreite des Rasters übereinstimmt. Die Verstellung der Blendenplatten erfolgt über einen doppelarmigen Hebel, der mit nur zwei Blendenplatten in Verbindung steht.

Aus der US 4,419,585 ist ein Kollimator bekannt, der aus einem Stapel Aperturplatten besteht, die gemeinsam in die gleiche Richtung mit unterschiedlicher Weglänge derart verschiebbar sind, dass ein schräger, von dem Grad der Verschiebung abhängiger, um einen bestimmten Winkel geneigter Stapel entsteht.

Aus der US 2,186,203 ist ein optischer Filter bekannt, bei dem zwei übereinander liegende Platten mit Öffnungen diagonal gegeneinander verschiebbar sind, um die Strahlungsdurchlässigkeit zu erhöhen oder zu erniedrigen.

Aus der DE 43 27 944 ist ein zweidimensionaler Bilddetektor mit einer Sensoranordnung bekannt, die eine Vielzahl in Matrixform angeordneter Bildelemente aufweist.

**Offenbarung der Erfindung**

Aufgabe der vorliegenden Erfindung ist es, eine Blendenanordnung für ein mikrooptisches System bereitzustellen, mit der sehr fein veränderliche, aber dennoch genau definierte radiometrische und dabei über einen weiten Bereich variierbare Verhältnisse innerhalb kürzester Zeit geschaffen werden können.

Diese Aufgabe wird durch die Blendenanordnung für ein mikrooptisches System gemäß Patentanspruch 1 gelöst. Vorteilhafte Ausführungsformen sind in den abhängigen Patentansprüchen wiedergegeben.

Die erfindungsgemäße Blendenanordnung gestattet ein stetiges Abblenden jeder der Mikrooptiken.

Gemäß einem Beispiel, das nicht alle in Patentanspruch 1 aufgeführten Merkmale aufweist, ist eine Mehrzahl von übereinanderliegenden, gegeneinander verschiebbaren Gitterrasternvorgesehen, deren Rastermaß dem Rastermaß des Rasters von Mikrooptiken entspricht, und Stellmittel zum progressiven Verschieben der Gitterraster relativ zueinander.

Auf diese Weise ist jeder Mikrooptik ein Rasterelement jedes Gitterrasters zugeordnet. Durch die Verschiebung der Gitterraster gegeneinander wird die Apertur für jede Mikrooptik in gleicher Weise reduziert.

Die Stellmittel können Piezosteller sein, wobei jeder Piezosteller jeweils einem Gitterraster zugeordnet ist und das gesamte Gitterraster verstellt. Die Piezosteller sind so angesteuert, dass die Piezosteller für die aufeinanderliegenden Gitterraster progressiv zunehmende Stellwege ausführen. Die Gitterraster können von einer quadratischen

Gitterstruktur gebildet sein. Die Piezosteller können so angeordnet sein, daß die Gitterraster durch die Stellmittel diagonal zu der Gitterstruktur verschiebbar sind. Damit die Lage der so gebildeten Aperturen relativ zu den Mikrooptiken unverändert bleibt, ist es zweckmäßig, wenn die aufeinandefolgenden Gitterraster abwechselnd in der einen und in der entgegengesetzten Richtung relativ zueinander verstellbar sind.

Ein Ausführungsbeispiel der Erfindung ist nachstehend unter Bezugnahme auf die zugehörigen Zeichnungen näher erläutert.

**Kurze Beschreibung der Zeichnungen**

Fig. 1 zeigt eine Blendenanordnung für ein mikrooptisches System im voll geöffneten Zustand, in welchem alle als quadratische Gitterstrukturen ausgebildeten Gitterraster deckend übereinanderliegen.

Fig.2 zeigt zwei Gitterraster, die zur Verkleinerung der Apertur in Diagonalrichtung gegeneinander verstellt sind.

Fig.3 zeigt drei in Diagonalrichtung gegeneinander verstellte Gitterraster.

Fig.4    zeigt drei in Diagonalrichtung gegeneinander verstellte Gitterraster.

Fig.5    zeigt sieben in Diagonalrichtung gegeneinander verstellte Gitterraster, durch welche die Apertur vollständig geschlossen ist.

Fig.6    zeigt schematisch die Anordnung und Verstellung der Gitterraster.

**Bevorzugte Ausführungen der Erfindung**

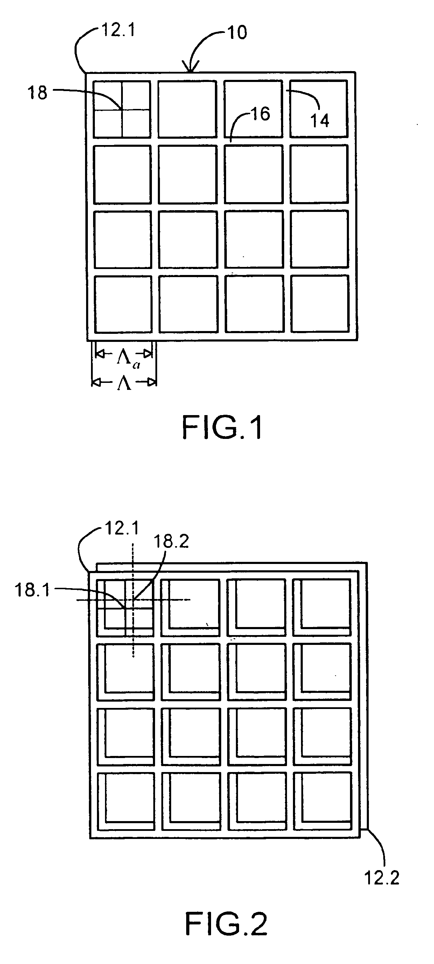

In Fig.1 ist mit 10 eine Blendenanordnung für ein (nicht dargestelltes) mikrooptisches System bezeichnet. Die Blendenanordnung 10 besteht aus einer Mehrzahl von übereinanderliegenden Gitterrastern. In Fig.1 liegen die Gitterraster deckend übereinander, so daß nur das oberste Gitterraster 12.1 zu sehen ist. Die Gitterraster 12.1... sind von quadratischen Gitterstrukturen gebildet. Die Gitterstrukturen bilden vertikale (in Fig.1) Stege 14 und waagerechte Stege 16. Das Rastermaß A des Gitterrasters 12.1 und aller darunter liegenden Gitterraster entspricht dem Rastermaß des mikrooptischen Systems, d.h. dem Rastermaß, mit welchem die Mikrooptiken des mikrooptischen Systems in einem Raster angeordnet sind. Mit $\Lambda_a$ ist die Kantenlänge der quadeatischen Öffnung jedes Rasterelements des Giterrasters 12.1 usw. bezeichnet. Man kann einen "Füllfaktor" FF definieren, nämlich das Verhältnis der freien Fläche eines Rasterelements der Blendenanordnung zur gesamten Fläche des Rasterelements. Im Zustand von Fig.1 ist dieser Füllfaktor

$$FF = \left(\frac{\Lambda_a}{\Lambda}\right)^2 .$$

Die Stegbreite ist

$$\Delta = \Lambda - \Lambda_a .$$

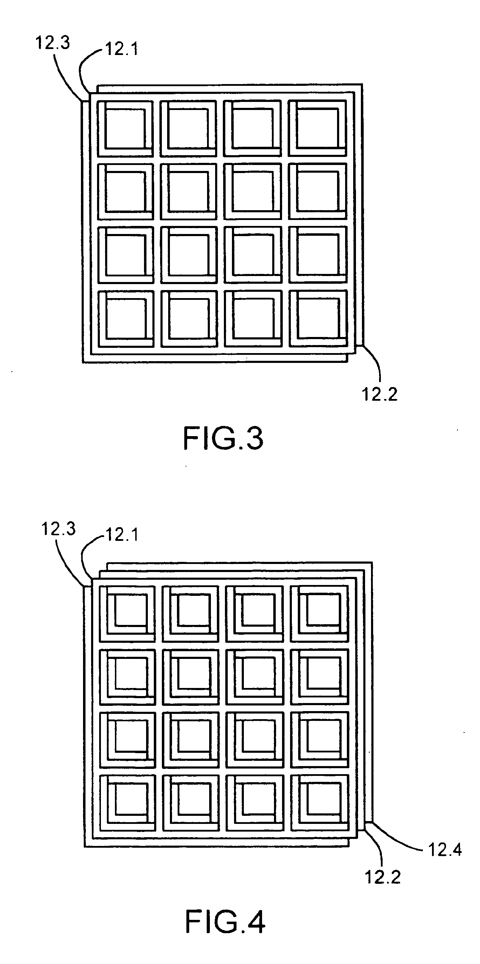

Das Zentrum jedes Rasterelements ist in Fig.1 durch ein (gedachtes) Fadenkreuz 18 angedeutet.
Fig.2 zeigt zwei übereinanderliegende Gitterraster 12.1 und 12.2, die in Richtung der Diagonalen der quadratischen Gitterstruktur von links unten nach rechts oben gegeneinander verschoben sind. Das ist an den Fadenkreuzen 18.1 und 18.2 am besten erkennbar. Die maximal mögliche Verschiebung der Gitterraster 12.1 und 12.2 gegeneinander ist $\sqrt{2}\,\Delta$ Bei größeren Verschiebungen würde wieder ein Spalt zwischen den Stegen der Gitterstrukturen auftreten. Eine kleinere Verschiebung der Gitterraster gegeneinander bewirkt eine entsprechend kleinere Verringerung der freien Apertur.
Bei Verwendung von drei Gitterrastern 12.1, 12.2 und 12.3 wird das Gitterraster 12.2 gegenüber dem Gitterraster 12.1 diagonal von links unten nach rechts oben verschoben, während das nächste Gitterraster 12.3 in entgegengesetzter Richtung von rechts oben nach links unten verschoben wird. Das ist in Fig.3 dargestellt. Das Gitterraster 12.2 engt daher das Fenster des Gitterrasters 12.1 von links unten her ein, während das Gitterrraster 12.3 das Fenster des Gitterrasters 12.1 von rechts oben her einengt. Damit bleibt das Zentrum der freigelassenen Apertur jeweils auf der optischen Achse des zugehörigen Mikroobjektivs des mikrooptischen Systems.
Fig.4 zeigt eine Blendenanordnung mit vier Gitterrastern 12.1, 12.2, 12.3 und 12.4. Gegenüber dem Gitterraster 12.1 sind die Gitterraster sind die Gitterraster 12.2 und 12.4 diagonal von links unten nach rechts oben verschoben. Das Gitterraster ist in entgegengesetzter Richtung von rechts oben nach links unten verschoben. Der Verschiebeweg des Gitterrasters 12.2 gegenüber dem Gitterraster 12.1 ist gleich dem Verschiebeweg des Gitterrasters 12.4 gegenüber dem Gitterraster 12.2. Der Verschiebeweg des Gitterrasters 12.3 gegenüber dem als Referenz dienenden Gitterraster 12.1 ist entgegengesetzt gleich dem Verschiebeweg des Gitterrasters 12.2 gegenüber dem Gitterraster 12.1.

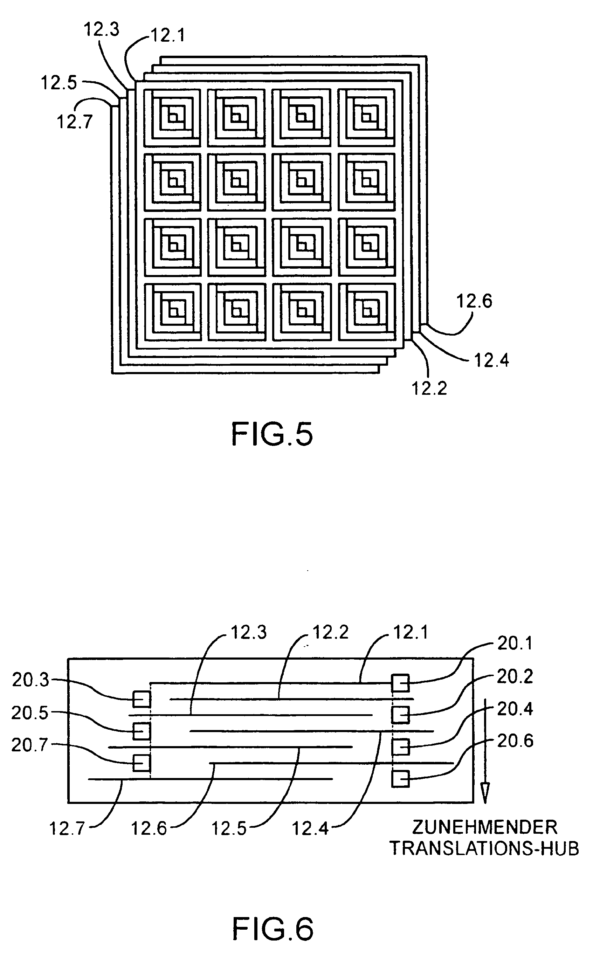

In Fig.5 ist eine Blendenanordnung mit sieben Gitterrastern 12.1, 12.2, 12.3, 12.4, 12.5, 12.6 und 12.7 dargestellt. Die Gitterraster 12.2, 12.4 und 12.6 sind gegenüber dem Gitterraster 12.1 diagonal von links unten nach rechts oben in Fig.5 verschoben. Die Gitterraster 12.3, 12.5 und 12.7 sind gegenüber dem Gitterraster 12.1 von rechts oben nach links unten verschoben. Die Verschiebewege der Gitterraster 12.2, 12.4 und 12.6 sind dabei progressiv größer und entsprechen dem einfachen, doppelten, und dreifachen Verschiebeweg zwischen den Gitterrastern 12.1 und 12.2. Entsprechend werden die entgegengerichteten Verschiebewege der Gitterstrukturen 12.3, 12.5 und 12.7 progressiv größer und entsprechen (mit umgekehrtem Vorzeichen) dem einfachen, doppelten, und dreifachen Verschiebeweg zwischen den Gitterrastern 12.1 und 12.2.

Fig.6 ist ein schematischer Diagonalschnitt durch die Blendenanordnung von Fig.5.

Die sieben Gitterraster 12.1, 12.2, 12.3, 12.4, 12.5, 12.6 und 12.7 sind übereinander in Fig.6 angeordnet. Jedes Gitterraster 12.1, 12.2, 12.3, 12.4, 12.5, 12.6 und 12.7 ist von einem zugeordneten Piezosteller 20.1, 20.2, 20.3, 20.4, 20.5, 20.6 bzw. 20.7 verstellbar.

Dabei greifen die Piezosteller 20.1, 20.2, 20.4 und 20.6 an der in Fig.6 rechten Seite an den zugehörigen Gitterrastern 12.1, 12.2, 12.4 bzw. 12.6 an. Dadurch werden die Gitterraster 12.1, 12.2, 12.4 und 12.6 nach links in Fig. 6 bzw. nach rechts oben in Fig.5 verstellt. Die Piezosteller 20.3, 20.5 und 20.7 greifen an der in Fig.6 linken Seite an den Gitterrastern 12.3, 12.5 bzw. 12.7 an. Dadurch werden die Gitterraster 12.3, 12.5 und 12.7 nach links unten in Fig. 5 bewegt.

Quantitativ ergibt sich folgendes:

Wenn die Gitterraster den maximal sinnvollen Hub $\sqrt{2}\,\Delta$ ausführen, dann ergibt sich für die Translationsvektoren

$$(x,y) = \frac{\rho_n(N)}{2}(\sqrt{2}, \sqrt{2}) \quad \text{n gerade}$$

$$(x,y) = \frac{\rho_n(N)}{2}(-\sqrt{2}, -\sqrt{2}) \quad \text{n ungerade,}$$

wobei

$$\rho_n(N) \in \left[0, \sqrt{2}\,\Delta\right] \qquad 2 \le N \le 3$$

$$\rho_n(N) \in \left[0, 2\sqrt{2}\,\Delta\right] \qquad 4 \le N \le 5$$

$$\rho_n(N) \in \left[0, 3\sqrt{2}\,\Delta\right] \qquad 6 \le N \le 7$$

Dabei sind N die Anzahl der in der Blendenanordnung vorgesehenen Gitterraster, n die Nummer des betreffenden Gitterrasters, $\rho_n$ der Stellweg des Gitterrasters n in Diagonalrichtung und x und y die Komponenten des Translationsvektors. Die Stellwege sind auf das Gitterraster 12.1 bezogen.

Bei einer geraden Anzahl von Gitterrastern ist eine Korrekturbewegung des "Referenz"-Gitterrasters 12.1 erforderlich, um die Apertur jeweils symmetrisch zur optischen Achse der Mikrooptik zu machen. Diese Korrektur erfolgt durch den Piezosteller 20.1. Eine entsprechende Korrektur der Stellwege erfolgt auch an den Stellwegen der übrigen Gitterraster, die auf das Referenz-Gitterraster 12.1 bezogen sind. Diese Korrektur ist

$$\rho_k = -\frac{\rho_n(2)}{2}.$$

Die durch das Verschieben der Gitter erreichte Verkleinerung der Apertur ist

$$\Lambda_c^{\;2} = F_N(\rho)\,\Lambda_a^{\;2}\,,$$

wobei $\Lambda_c$ die Kantenlänge der resultierenden, quadratischen freien Fläche ist. Dabei ergibt sich der Faktor $F_N$ zu

$$F_N(\rho) = \left(1 - \frac{(N-1)\,\rho_n(2)}{\sqrt{2}\,\Lambda_a}\right)^2.$$

Dabei ist $\rho_n(2)$ der Stellweg, der sich für N=2, also für zwei Gitterraster, ergeben würde und der demgemäß stetig zwischen 0 und $\sqrt{2}\,\Delta$ veränderlich ist. Die maximale Verkleinerung der Apertur oder freien Fläche ergibt sich bei Relativverschiebung bis zum jeweiligen maximalen Hub zu

$$F_{N\max} = F_N(\sqrt{2}\,\Delta) = \left(N - (N-1)\frac{\Lambda}{\Lambda_a}\right)^2.$$

Die Gitterstrukturen können bis zum vollständigen Schließen der Apertur verstellt werden, sofern die Anzahl der übereinanderliegenden Gitterstrukturen unter Berücksichtigung des Füllfaktors FF hinreichend groß ist. Die Anzahl der zu einem vollständigen Schließen der Apertur erforderlichen Gitterstrukturen für einen bestimmten Füllfaktor FF ist

$$N_g(FF) = \frac{1}{(1 - \sqrt{FF})} \quad \text{aufgerundet.}$$

Das mikrooptische System kann ein Raster von Mikrooptiken sein. Es kann sich aber beispielsweise auch um ein Raster von Mikrospiegeln handeln. Es gibt Spiegelraster mit einer zweidimensionalen Anordnung von einzeln ansteuerbaren Mikrospiegeln. Auch in Verbindung mit einem solchen Raster von Mikrospiegeln ist die beschriebene Blendenanordnung anwendbar.

**Patentansprüche**

1. Blendenanordnung für ein mikrooptisches System, das ein zweidimensionales Raster von Mikrooptiken mit einem Rastermaß umfasst, mit mehr als zwei übereinander liegenden Gitterrastern (12.1 ...), deren Rastermaß ($\Lambda$) dem Rastermaß des Rasters von Mikrooptiken entspricht, wobei die Gitterraster (12.1 ...) über Piezosteller (20.1 ...) abwechselnd in der einen und in der entgegengesetzten Richtung relativ zueinander verstellbar sind.

2. Blendenanordnung nach Anspruch 1,
   **dadurch gekennzeichnet, dass**
   die Gitterraster (12.1...) von einer quadratischen Gitterstruktur gebildet sind.

3. Blendenanordnung nach Anspruch 2,
   **dadurch gekennzeichnet, dass**
   die Gitterraster (12.1...) durch die Stellmittel (20.1...) diagonal zu der Gitterstruktur verschiebbar sind.

**Claims**

1. Stop arrangement for a microoptical system which comprises a two-dimensional grid of microoptical means with a pitch, having more than two stacked grating grids (12.1...) whose pitch ($\Lambda$) corresponds to the pitch of the grid of microoptical means, wherein the grating grids (12.1...) can be adjusted relative to one another alternately in one direction and in the opposite direction using piezoactuators (20.1...).

2. Stop arrangement according to Claim 1, **characterized in that** the grating grids (12.1...) are in the form of a square grating structure.

3. Stop arrangement according to Claim 2, **characterized in that** the actuating means (20.1...) can be used to displace the grating grids (12.1...) diagonally relative to the grid structure.

**Revendications**

1. Arrangement de diaphragme pour un système micro-optique qui comprend un quadrillage bidimensionnel de micro-optiques avec une cote de quadrillage, comprenant plus de deux grilles (12.1, ...) disposées l'une au-dessus de l'autre dont la cote de quadrillage ($\Lambda$) correspond à la cote de quadrillage des micro-optiques, les grilles (12.1, ...) pouvant être positionnées en alternance dans une direction et dans la direction opposée les unes par rapport aux autres par le biais de positionneurs piézoélectriques (20.1, ... ).

2. Arrangement de diaphragme selon la revendication 1, **caractérisé en ce que** les grilles (12.1, ...) sont formées par une structure de grille quadratique.

3. Arrangement de diaphragme selon la revendication 2, **caractérisé en ce que** les grilles (12.1, ...) peuvent être déplacées par les moyens de positionnement (20.1, ...) dans le sens diagonal par rapport à la structure de grille.

FIG.1

FIG.2

12.3  12.1

12.2

**FIG.3**

12.3  12.1

12.4

12.2

**FIG.4**

FIG.5

ZUNEHMENDER
TRANSLATIONS-HUB

FIG.6